# EUROPÄISCHE PATENTSCHRIFT

(11) **EP 3 008 842 B1**
(45) Veröffentlichungstag und Bekanntmachung des Hinweises auf die Patenterteilung: **30.11.2016**
(21) Anmeldenummer: 15716032.6
(22) Anmeldetag: 10.04.2015
(51) Int. Cl.: H04J 3/06, H04L 12/40

(54) **VERFAHREN ZUM BETREIBEN EINES TEILNEHMERS EINES KOMMUNIKATIONSNETZWERKS**
METHODS OF OPERATING A USER IN A COMMUNICATION NETWORK
PROCEDE D'OPERATION D'UN UTILISATEUR DANS UN RESEAU DE COMMMUNICATION

(30) Priorität: 11.04.2014 DE 102014105211
(43) Veröffentlichungstag der Anmeldung: 20.04.2016
(73) Patentinhaber: Beckhoff Automation GmbH, 33415 Verl (DE)
(72) Erfinder: BUNTE, Thorsten, 33335 Gütersloh (DE); BÜTTNER, Holger, 12157 Berlin (DE); VONNAHME, Erik, 33154 Salzkotten (DE); JANSSEN, Dirk, 33415 Verl (DE); RETTIG, Thomas, 33378 Rheda-Wiedenbrück (DE); BECKHOFF, Hans, 33415 Verl (DE)
(74) Vertreter: Patentanwaltskanzlei WILHELM & BECK
(86) Internationale Anmeldenummer: PCT/EP2015/057848
(87) Internationale Veröffentlichungsnummer: WO 2015/155333

(56) Entgegenhaltungen:
- EP-A2- 1 653 651
- US-A1- 2011 200 051
- US-A1- 2013 039 359
- GIANLUCA CENA ET AL: "Evaluation of EtherCAT Distributed Clock Performance", IEEE TRANSACTIONS ON INDUSTRIAL INFORMATICS, IEEE SERVICE CENTER, NEW YORK, NY, US, Bd. 8, Nr. 1, 1. Februar 2012 (2012-02-01) , Seiten 20-29, XP011398084, ISSN: 1551-3203, DOI: 10.1109/TII.2011.2172434
- HENDERSON M ET AL: "Sampling synchronization with Gigabit Ethernet", OCEANS 2009, MTS/IEEE BILOXI - MARINE TECHNOLOGY FOR OUR FUTURE: GLOBAL AND LOCAL CHALLENGES, IEEE, PISCATAWAY, NJ, USA, 26. Oktober 2009 (2009-10-26), Seiten 1-7, XP031643103, ISBN: 978-1-4244-4960-6

## Beschreibung

Die Erfindung betrifft ein Verfahren zum Betreiben eines Teilnehmers eines Kommunikationsnetzwerks. Die Erfindung betrifft ferner einen Teilnehmer und ein Kommunikationsnetzwerk und ein Computerprogramm.

In einem Ethernet-Netzwerk, in dem die Telegramme von einem Teilnehmer empfangen, bearbeitet und an den nächsten Teilnehmer weitergeleitet werden, hängt eine Verzögerungszeit je Teilnehmer von einer maximalen Abweichung der Sendetakte der Teilnehmer ab. Ein Teilnehmer empfängt ein Telegramm mit dem Sendetakt des vorhergehenden Teilnehmers n - 1 und sendet dasselbe Telegramm mit seinem eigenen Sendetakt n. Ein maximales Ethernet-Telegramm ist 1536 Bytes lang, das heißt die Übertragung dieses Telegramms würde bei einem genauen Sendetakt bei 100 Mbit 1536 mal 8 mal 10 ns = 122,88 µs dauern. Bei einer Sendetaktabweichung von 100 ppm = 0,01% würde das Telegramm 122,88 µs mal 0,0001 = 12,29 ns länger bzw. kürzer sein. Maximal wäre also eine Abweichung von 24,58 ns vorhanden. Das entspräche der Übertragung von ca. 2,5 Bit bei 100 Mbit. Eine Abweichung hängt nur von der Framelänge in Bytes ab, nicht von einer Übertragungsgeschwindigkeit. Bei Gbit ist der Frame nur 1/10 so lang. Die Abweichung ist generell [Framelänge in bits] mal [maximale Abweichung in ppm]. Wenn sogenannte Jumboframes (Ethernet-Telegramme mit einer größeren Länge als 1536 Bytes) verwendet würden, so würden sich diese Werte noch erhöhen. In den Teilnehmern müsste je Richtung ein internes FIFO (FIFO steht für "First In First Out") von mindestens dieser Größe vorhanden sein, durch das das Telegramm laufen muss, damit ein zu sendendes Bit auch schon von einem Teilnehmer empfangen wurde. Dadurch verlängert sich eine Durchlaufzeit des Telegramms durch das gesamte Netzwerk mit der maximalen Abweichung der Sendetakte und der Anzahl der Teilnehmer.

Die US 2013/039359 A1 offenbart die Merkmale der Ansprüche 1, 1, 7 und 12 und beschreibt, dass die Synchronisierung der Uhr auf Basis der Referenzzeit oder durch den Takt der physikalischen Schicht wahlweise möglich ist.

Die EP 1653651 A2 offenbart, das Taktsignal der einkommenden Leitung zurückzugewinnen und als Sendetakt weiter zu leiten. Ferner ist ein Fast-Ethernet beschrieben, wobei Synchronisationsinformation und Synchronisationspakete verwendet werden.

Der Artikel GIANLUCA CENA ET AL, "Evaluation of EtherCAT Distributed Clock Performance", IEEE TRANSACTIONS ON INDUSTRIAL INFORMATICS, IEEE SERVICE CENTER, NEW YORK, NY, US,), Bd. 8, Nr: 1, 1. Feb. 2012, S. 20 - 29, XP011398084, ISSN 1551-3203 offenbart eine Synchronisierung in Teilnehmer in einem EtherCAT-System. Ein Teilnehmer umfasst dabei eine interne Uhr die auf Grundlage einer empfangenden Referenzzeit nachgeregelt wird.

Der Artikel HENDERSON M ET AL, "Sampling synchronization with Gigabit Ethernet", OCEANS 2009, MTS/IEEE BILOXI - MARINE TECHNOLOGY FOR OUR FUTURE: GLOBAL AND LOCAL CHALLENGES, IEEE, PISCATAWAY, NJ, USA, 26. Okt. 2009, S. 1 - 7, XP031643103, ISBN 978-1-4244-4960-6 offenbart eine Taktsynchronität von Empfangs- und Sendetakt im Ethernet, wobei eine Uhrinformation durch Zeitstempel generiert wird.

Die der Erfindung zugrunde liegende Aufgabe kann daher darin gesehen werden, ein verbessertes Verfahren zum Betreiben eines Teilnehmers eines Kommunikationsnetzwerks bereitzustellen, das die bekannten Nachteile überwindet und eine Durchlaufzeit eines Telegramms durch den Teilnehmer verringert.

Die der Erfindung zugrunde liegende Aufgabe kann daher darin gesehen werden, einen entsprechenden Teilnehmer für ein Kommunikationsnetzwerk bereitzustellen.

Die der Erfindung zugrunde liegende Aufgabe kann des Weiteren darin gesehen werden, ein Kommunikationsnetzwerk bereitzustellen.

Des Weiteren kann die der Erfindung zugrunde liegende Aufgabe darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Teilnehmers eines Kommunikationsnetzwerks bereitgestellt, umfassend die folgenden Schritte: in einem ersten Zyklus:
- Empfangen einer Referenzzeit über das Kommunikationsnetzwerk mittels des Teilnehmers,
- Nachregeln einer internen Uhr des Teilnehmers basierend auf der empfangenen Referenzzeit und
- Ermitteln eines Sendetakts basierend auf der nachgeregelten internen Uhr.

Nach noch einem Aspekt wird ein Teilnehmer für ein Kommunikationsnetzwerk bereitgestellt, umfassend:
- eine Kommunikationsschnittstelle zum Empfangen einer Referenzzeit in einem ersten Zyklus über das Kommunikationsnetzwerk,
- eine interne Uhr,
- eine Regeleinrichtung zum Nachregeln der internen Uhr in dem ersten Zyklus basierend auf der empfangenen Referenzzeit und
- eine Ermittlungseinrichtung zum Ermitteln eines Sendetakts in dem ersten Zyklus basierend auf der nachgeregelten internen Uhr.

Nach noch einem Aspekt wird ein Kommunikationsnetzwerk bereitgestellt, umfassend zwei erfindungsgemäße Teilnehmer für ein Kommunikationsnetzwerk, wobei die Teilnehmer unmittelbar nacheinander geschaltet sind, so dass einer der Teilnehmer Telegramme des anderen Teilnehmers mit der Senderate des anderen Teilnehmers empfangen und basierend auf den empfangenen Telegrammen ermittelte verarbeitete Telegramme mit seiner Senderate senden kann.

Gemäß einem anderen Aspekt wird ein Computerprogramm bereitgestellt, welches Programmcode zur Durchführung des Verfahrens zum Betreiben eines Teilnehmers eines Kommunikationsnetzwerks umfasst, wenn das Computerprogramm auf einem Computer, zum Beispiel einem Teilnehmer, ausgeführt wird.

Die Erfindung umfasst also insbesondere den Gedanken, die interne Uhr des Teilnehmers basierend auf einer Referenzzeit nachzuregeln. Dies bewirkt in vorteilhafter Weise, dass die interne Uhr auf eine Referenzuhr synchronisiert werden kann, wobei diese Referenzuhr die Referenzzeit bereitstellt. Die nachgeregelte Uhr ist also synchronisiert mit der Referenzuhr. Dadurch ist also in vorteilhafter Weise der Sendetakt ebenfalls über die interne Uhr mit der Referenzuhr synchronisiert. Es kann somit in vorteilhafter Weise bei Teilnehmern, die nach dem erfindungsgemäßen Verfahren betrieben werden, ein einheitlicher Sendetakt ermittelt werden. Das heißt also insbesondere, dass diese Teilnehmer einen einheitlichen Sendetakt aufweisen. Denn die jeweiligen internen Uhren der Teilnehmer sind auf der Referenzuhr synchronisiert, weisen also eine gleiche interne Uhrzeit auf. Da der jeweilige Sendetakt basierend auf der internen Uhr des jeweiligen Teilnehmers ermittelt wird, weisen somit die Teilnehmer einen gemeinsamen oder einheitlichen Sendetakt auf. Das heißt also insbesondere, dass Abweichungen, wie sie im bekannten Stand der Technik vorkommen können, erfindungsgemäß verringert oder sogar ganz vermieden werden können. Dadurch verkürzt sich im Vergleich zum bekannten Stand der Technik eine Durchlaufzeit eines Telegramms durch einen Teilnehmer und insbesondere durch das Kommunikationsnetzwerk. Insbesondere kann in vorteilhafter Weise in der Regel auf einen FIFO-Speicher verzichtet werden oder ein eventuell vorhandener FIFO-Speicher kann im Vergleich zum bekannten Stand der Technik eine kleinere Speichergröße aufweisen. Dadurch kann in vorteilhafter Weise ein Speicherbedarf verringert werden.

Die Referenzzeit kann nach einer Ausführungsform von einer Referenzuhr bereitgestellt werden. Es ist also vorzugsweise eine Referenzuhr vorgesehen, die die Referenzzeit bereitstellt. Eine solche Referenzuhr kann beispielsweise in einem Teilnehmer des Kommunikationsnetzwerks integriert oder implementiert sein.

Das Nachregeln der internen Uhr des Teilnehmers basierend auf der empfangenen Referenzzeit bewirkt insbesondere, dass die interne Uhr auf die Referenzuhr synchronisiert wird. Die interne Uhr des Teilnehmers läuft somit synchron zu der Referenzuhr. Dies üblicherweise innerhalb gewisser Toleranzgrenzen, beispielsweise kann eine Genauigkeit von kleiner als 1 ppm erreicht werden. Nach der in der Beschreibungseinleitung durchgeführten Berechnung im Zusammenhang mit dem bekannten Stand der Technik kann somit ein interner FIFO-Speicher entfallen, sodass keine zusätzliche Verlängerung einer Laufzeit des Telegramms durch den Teilnehmer entsteht. Denn die erreichte Genauigkeit kann kleiner als 1 ppm betragen.

Nach einer Ausführungsform kann vorgesehen sein, dass das Nachregeln ein Ermitteln eines Inkrementierungswerts umfasst, basierend auf welchem die interne Uhr inkrementiert wird.

Inkrementiert bedeutet hier insbesondere, dass hochgezählt wird. Ein Inkrementierungswert kann insbesondere als ein Inkrement bezeichnet werden. Es wird also insbesondere ein interner Zähler der internen Uhr hochgezählt. Das heißt also insbesondere, dass, wenn die interne Uhr relativ zu der Referenzuhr schneller oder langsamer läuft, also vor- oder nachgeht, kann ein geeigneter Wert, der Inkrementierungswert, ermittelt werden passend für den konkreten Fall, um das Nachgehen respektive Vorgehen zu kompensieren oder auszugleichen.

Nach einer anderen Ausführungsform kann vorgesehen sein, dass ein Sendetakt, der in einem dem ersten Zyklus zeitlich vorhergehenden zweiten Zyklus ermittelt wurde, mit der im ersten Zyklus empfangenen Referenzzeit verglichen wird, wobei der Inkrementierungswert abhängig von dem Vergleich ermittelt wird. Es wird also in vorteilhafter Weise ein älterer Sendetakt zum Vergleich herangezogen. Der erste Zyklus kann vorzugsweise unmittelbar dem zweiten Zyklus folgen. Dies bewirkt in vorteilhafter Weise eine besonders einfache Nachregelung.

In einer anderen Ausführungsform kann vorgesehen sein, dass eine Güte des Nachregelns ermittelt wird, wobei abhängig von der ermittelten Güte eine Latenz eines zum Speichern eines empfangenen Telegramms vorgesehenen FIFO-Speichers des Teilnehmers eingestellt wird.

Eine Latenz gibt eine Zeitverzögerung zwischen einem Empfangen eines Telegramms ("first in") und dem Senden dieses Telegramms ("first out") vor. Das heißt also insbesondere, dass, wenn Differenzen oder Unterschiede zwischen der internen Uhr und der Referenzuhr nach dem Nachregeln immer noch vorhanden sein sollten, aufgrund des FIFO-Speichers dennoch kompensiert werden können. Hierfür reicht es aber aus, eine Latenz des FIFOs kleiner zu wählen als im Fall einer maximal zu berücksichtigenden Abweichung wie im bekannten Stand der Technik. Somit ist selbst bei einem Vorhandensein eines FIFO-Speichers eine Durchlaufzeit des Telegramms durch den Teilnehmer immer noch verringert bezogen auf den bekannten Stand der Technik. Denn hier musste die Latenz des FIFO-Speichers so gewählt werden, dass die maximal mögliche Abweichung berücksichtigt wird.

In einer anderen Ausführungsform kann vorgesehen sein, dass das Ermitteln der Güte ein Vergleichen der Senderate des Teilnehmers mit einer Senderate eines weiteren Teilnehmers des Kommunikationsnetzwerks umfasst, wobei die Latenz abhängig von dem Vergleich eingestellt wird. Die beiden Teilnehmer können vorzugsweise unmittelbar nacheinander geschaltet sein.

Je nach Übereinstimmung der beiden Senderaten der jeweiligen Teilnehmer kann also die Latenz gewählt werden. So können Unterschiede in den Senderaten, die eventuell auch nach der Nachregelung der jeweiligen internen Uhren der Teilnehmer verbleiben, kompensiert werden. Die Latenz muss aber nicht so groß gewählt werden wie im bekannten Stand der Technik. Denn dort musste die Latenz so eingestellt werden, dass noch die maximal mögliche Abweichung kompensiert werden kann. Somit verringert sich erfindungsgemäß selbst bei einem Vorhandensein eines FIFO-Speichers eine Durchlaufzeit eines Telegramms durch die beiden Teilnehmer.

In einer anderen Ausführungsform kann vorgesehen sein, dass eine Zyklusdauer von einem Takt einer Zeitquelle des Teilnehmers vorgegeben wird.

Die Zeitquelle gibt also vorzugsweise einen Takt vor. Die Zeitquelle kann vorzugsweise einen Quarz und/oder eine PLL umfassen. Hierbei steht die Abkürzung "PLL" für "Phase Locked Loop", auf Deutsch eine Phasenregelschleife. Das heißt also insbesondere, dass pro Zyklus inkrementiert wird. Das heißt also insbesondere, dass die interne Uhr pro Zyklus mit dem Inkrementierungswert inkrementiert wird. Der Takt entspricht dem Zyklus.

Nach einer anderen Ausführungsform kann vorgesehen sein, dass das Ermitteln ein Auswählen des Inkrementierungswerts aus einer Gruppe von Inkrementierungswerten umfasst.

Dadurch ist in vorteilhafter Weise ein besonders einfaches Ermitteln des Inkrementierungswertes bewirkt. Das Auswählen wird also insbesondere abhängig davon durchgeführt, ob die interne Uhr der Referenzzeit, also der Referenzuhr, vorausläuft oder hinterherläuft, also nachgeht.

Nach einer Ausführungsform kann vorgesehen sein, dass die Regeleinrichtung ausgebildet ist, einen Inkrementierungswert zu ermitteln und zum Nachregeln die interne Uhr basierend auf dem ermittelten Inkrementierungswert zu inkrementieren.

In einer anderen Ausführungsform kann vorgesehen sein, dass die Regeleinrichtung ausgebildet ist, einen in einem dem ersten Zyklus zeitlich vorhergehenden zweiten Zyklus ermittelten Sendetakt mit der im ersten Zyklus empfangenen Referenzzeit zu vergleichen und den Inkrementierungswert abhängig von dem Vergleich zu ermitteln. Das Vergleichen kann beispielsweise mittels einer Vergleichseinrichtung durchgeführt werden. Die Vergleichseinrichtung ist vorzugsweise von der Regeleinrichtung umfasst.

In einer anderen Ausführungsform kann vorgesehen sein, dass ein FIFO-Speicher zum Speichern eines empfangenen Telegramms vorgesehen ist, wobei eine Latenz des FIFO-Speichers abhängig von einer ermittelten Güte des Nachregelns einstellbar ist. Die Güte kann zum Beispiel mittels der Regeleinrichtung ermittelt werden. Zum Beispiel kann eine Güteermittlungseinrichtung vorgesehen sein. Die Güteermittlungseinrichtung kann vorzugsweise von der Regeleinrichtung umfasst sein. Die Latenz kann beispielsweise mittels der Regeleinrichtung eingestellt werden.

Nach einer anderen Ausführungsform kann vorgesehen sein, dass die Latenz abhängig von einem Vergleich der Senderate des Teilnehmers mit einer Senderate eines weiteren Teilnehmers des Kommunikationsnetzwerks einstellbar ist. Die Güteermittlungseinrichtung kann vorzugsweise diesen Vergleich durchführen. Die Latenz kann beispielsweise mittels der Regeleinrichtung eingestellt werden.

In einer anderen Ausführungsform kann vorgesehen sein, dass eine Zeitquelle zum Vorgeben einer Zyklusdauer abhängig von einem Takt der Zeitquelle vorgesehen ist. Die Zeitquelle ist vorzugsweise ausgebildet, einen Takt vorzugeben. Ein Takt entspricht einem Zyklus. Die Zeitquelle kann beispielsweise einen Quarz und/oder einen PLL umfassen, also eine Phasenregelschleife.

In einer anderen Ausführungsform kann vorgesehen sein, dass zwei Teilkommunikationsnetzwerke vorgesehen sind, wobei die zwei Teilnehmer dem einen der Teilkommunikationsnetzwerke zugeordnet sind, wobei zwischen den zwei Teilkommunikationsnetzwerken ein FIFO-Speicher zum Speichern von von einem der Teilkommunikationsnetzwerke zum anderen und umgekehrt gesendeten Telegrammen vorgesehen ist.

Aufgrund des FIFO-Speichers braucht das andere Teilkommunikationsnetzwerk nicht notwendigerweise erfindungsgemäße Teilnehmer, also Teilnehmer, die erfindungsgemäß mittels des Verfahrens betrieben werden. Das heißt also insbesondere, dass die Teilnehmer des anderen Teilkommunikationsnetzwerks frei von einer Regeleinrichtung sein können. Eine Synchronisation der Teilnehmer dieses Teilkommunikationsnetzwerks auf eine Referenzuhr ist somit nicht unbedingt erforderlich.

In einer Ausführungsform kann vorgesehen sein, dass ein Teilkommunikationsnetzwerk seine eigene Referenzuhr aufweist, auf die die jeweiligen internen Uhren der Teilnehmer des Teilkommunikationsnetzwerks synchronisiert werden. Das Teilkommunikationsnetzwerk kann insbesondere als ein synchronisiertes Teilkommunikationsnetzwerk bezeichnet werden. Bei mehreren Teilkommunikationsnetzwerken können zumindest einige, insbesondere alle, vorzugsweise jeweils eine eigene Referenzuhr aufweisen, auf die die jeweiligen internen Uhren der Teilnehmer des Teilkommunikationsnetzwerks synchronisiert werden. Ein solches Teilkommunikationsnetzwerk kann insbesondere als ein synchronisiertes Teilkommunikationsnetzwerk bezeichnet werden. Ein Teilkommunikationsnetzwerk, in dem die jeweiligen internen Uhren der Teilnehmer nicht auf eine Referenzuhr synchronisiert werden, kann beispielsweise als ein nichtsynchronisiertes Teilkommunikationsnetzwerk bezeichnet werden. Es kann vorzugsweise vorgesehen sein, dass eine gemeinsame Referenzuhr zur Synchronisation für die jeweiligen Uhren der Teilnehmer von mehreren Teilkommunikationsnetzwerken vorgesehen ist. Es ist also insbesondere ein FIFO-Speicher zwischen einem synchronisierten und einem nicht-synchronisierten Teilkommunikationsnetzwerk vorgesehen, über welchen die Telegramm vom synchronisierten zum nicht-synchronisierten und umgekehrt laufen müssen.

Nach einer Ausführungsform kann vorgesehen sein, dass die Teilnehmer Teilnehmer einer Automatisierungsanlage oder einer Automatisierungseinrichtung sind. Die Automatisierungsanlage oder -einrichtung kann beispielsweise eine Steuerungsanlage und/oder Steuerungseinrichtung umfassen. Die Teilnehmer können vorzugsweise Teilnehmer einer Steuerungsanlage und/oder einer Steuerungseinrichtung sein. Das heißt also, dass die entsprechende vorstehend genannte Anlage und/oder Einrichtung mehrere Teilnehmer aufweist, die über ein Kommunikationsnetzwerk miteinander verbunden sind. Zum Beispiel verbindet eine Datenleitung die Teilnehmer untereinander. Beispielsweise verbindet die Datenleitung den Master mit den Teilnehmern.

Über das Kommunikationsnetzwerk können Telegramme übertragen werden, so dass Telegramme von einem Teilnehmer zum nächsten Teilnehmer weitergeleitet werden können.

Nach einer Ausführungsform ist das Kommunikationsnetzwerk ein Ethernet-Kommunikationsnetzwerk. Das Telegramm kann beispielsweise ein Ethernettelegramm sein.

Nach einer anderen Ausführungsform ist das Kommunikationsnetzwerk ein EtherCAT-Kommunikationsnetzwerk, insbesondere basierend auf dem EtherCAT-Standard gemäß IEC-Norm "IEC 61158". Das Telegramm kann beispielsweise ein EtherCAT-Telegramm sein.

Nach einer anderen Ausführungsform kann der Teilnehmer einen Aktor und/oder einen Sensor steuern und/oder auslesen. Dies insbesondere basierend auf einem empfangenen Telegramm. Das heißt also insbesondere, dass der Teilnehmer einen Aktor und/oder einen Sensor steuern und/oder auslesen kann. Dies basierend auf einem empfangenen Telegramm. Denn in einem Telegramm sind vorzugsweise Informationen vorgesehen, die angeben, wie der Teilnehmer den Aktor und/oder den Sensor steuern und/oder auslesen soll.

Nach einer Ausführungsform kann der Teilnehmer ein empfangenes Telegramm verarbeiten. Ein Verarbeiten kann beispielsweise ein Lesen von Daten aus dem Telegramm umfassen. Ein Verarbeiten kann beispielsweise ein Schreiben von Daten in das Telegramm umfassen. Der Teilnehmer kann beispielsweise das verarbeitete Telegramm weitersenden.

Nach einer Ausführungsform kann vorgesehen sein, dass der Teilnehmer das empfangene Telegramm lediglich weiterleitet, also nicht verarbeitet.

Nach einer Ausführungsform kann das Kommunikationsnetzwerk eine Topologie ausgewählt aus der folgenden Gruppe von Topologien aufweisen: Ring, Linie, Stern, Baum und eine Kombination hiervon.

Nach einer Ausführungsform kann das Nachregeln laufzeitkompensiert erfolgen. Das heißt also insbesondere, dass laufzeitkompensiert nachgeregelt wird. Das heißt also insbesondere, dass eine Laufzeit zwischen der Referenzuhr und dem Teilnehmer ermittelt wird und bei dem Nachregeln berücksichtigt wird. Die Laufzeit bezeichnet insbesondere eine Zeit, die ein Telegramm von der Referenzuhr zum Teilnehmer benötigt. Das Nachregeln der internen Uhr des Teilnehmers wird also vorzugsweise basierend auf der empfangenen Referenzzeit und einer Laufzeit zwischen dem Teilnehmer und der Referenzuhr durchgeführt.

Nach einer Ausführungsform kann vorgesehen sein, dass der Teilnehmer ein Telegramm, ein verarbeitetes Telegramm oder ein weitergeleitetes Telegramm basierend auf dem ermittelten Sendetakt sendet.

Die im Zusammenhang mit dem Verfahren gemachten Ausführungen gelten analog für den Teilnehmer und für das Kommunikationsnetzwerk und umgekehrt. Das heißt also insbesondere, dass sich Ausführungsformen hinsichtlich des Teilnehmers und/oder des Kommunikationsnetzwerks aus Ausführungsformen hinsichtlich des Verfahrens und umgekehrt in jeder möglichen Kombination ergeben können. Wenn der Singular für "Teilnehmer" verwendet wird, so soll stets der Plural mitgelesen werden und umgekehrt.

Die Erfindung wird im Folgenden anhand von bevorzugten Ausführungsbeispielen näher erläutert. Hierbei zeigen
Fig. 1 zwei Teilnehmer,
Fig. 2 die zwei Teilnehmer der Fig. 1, wobei einer der Teilnehmer einen FIFO-Speicher aufweist,
Fig. 3 ein Blockdiagramm eines Verfahrens zum Betreiben eines Teilnehmers eines Kommunikationsnetzwerks,
Fig. 4 ein Ablaufdiagramm eines Verfahrens zum Betreiben eines Teilnehmers eines Kommunikationsnetzwerks,
Fig. 5 einen Teilnehmer für ein Kommunikationsnetzwerk,
Fig. 6 ein Kommunikationsnetzwerk und
Fig. 7 ein weiteres Kommunikationsnetzwerk.

Im Folgenden können für gleiche Merkmale gleiche Bezugszeichen verwendet werden. Des Weiteren kann der Übersicht halber vorgesehen sein, dass nicht in sämtlichen Zeichnungen sämtliche Merkmale eingezeichnet sind.

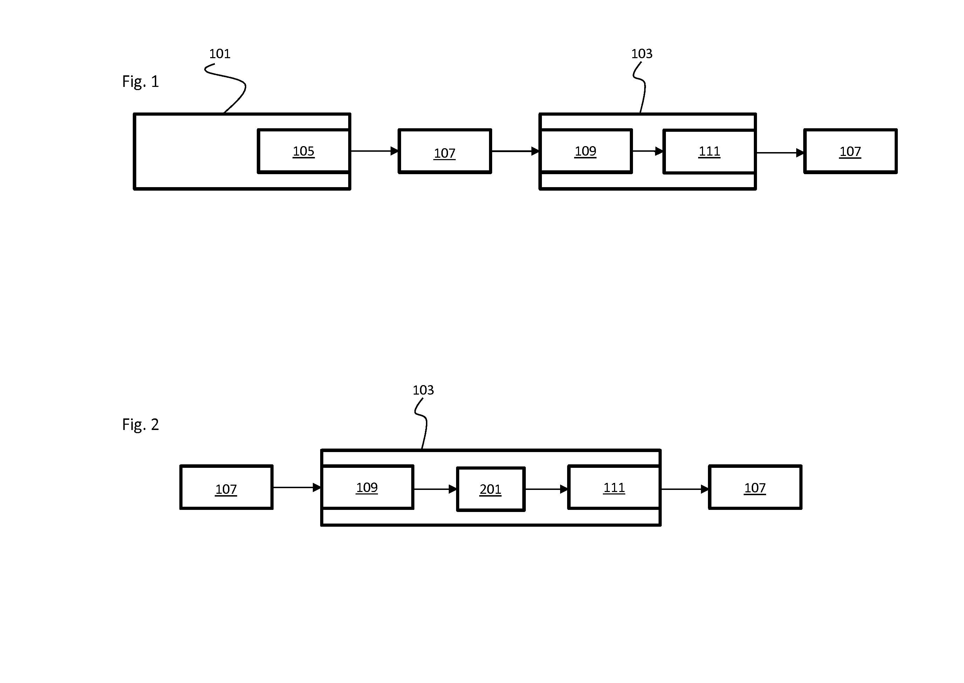

Fig. 1 zeigt zwei Teilnehmer 101 und 103.

Die beiden Teilnehmer 101 und 103 sind Teilnehmer eines Kommunikationsnetzwerks, beispielsweise eines Ethernet-Netzwerks, insbesondere eines EtherCAT-Netzwerks. Der Teilnehmer 101 sendet ein Telegramm 107 mit seinem Sendetakt 105 aus. Der Teilnehmer 103 empfängt das Telegramm 107 mit seinem Empfangstakt 109, der dem Sendetakt 105 des Teilnehmers 101 entspricht. Der Teilnehmer 103 kann das Telegramm 107 mit seinem eigenen Sendetakt 111 weitersenden. Vor dem Weitersenden kann der Teilnehmer 103 vorzugsweise das Telegramm 107 noch verarbeiten. Die Verzögerungszeit, also die Zeit, die das Telegramm zum Durchlaufen des Teilnehmers benötigt, je Teilnehmer hängt insbesondere von einer maximalen Abweichung der beiden Sendetakte 105 und 111 der beiden Teilnehmer 101, 103 ab.

Ein maximales Ethernet-Telegramm ist 1536 Bytes lang, das heißt die Übertragung dieses Telegramms würde bei einem genauen Sendetakt bei 100 Mbit 1536 mal 8 mal 10 ns = 122,88 µs dauern. Bei einer Sendetaktabweichung von 100 ppm = 0,01% würde das Telegramm 122,88 µs mal 0,0001 = 12,29 ns länger bzw. kürzer sein. Maximal wäre also eine Abweichung von 24,58 ns vorhanden. Das entspräche der Übertragung von ca. 2,5 Bit bei 100 Mbit. Eine Abweichung hängt nur von der Framelänge in Bytes ab, nicht von einer Übertragungsgeschwindigkeit. Bei Gbit ist der Frame nur 1/10 so lang. Die Abweichung ist generell [Framelänge in bits] mal [maximale Abweichung in ppm]. Wenn sogenannte Jumboframes (Ethernet-Telegramme mit einer größeren Länge als 1536 Bytes) verwendet würden, so würden sich diese Werte noch erhöhen.

In den beiden Teilnehmern 101 und 103 müsste also je Richtung ein interner FIFO-Speicher von mindestens dieser Größe vorhanden sein, durch den das Telegramm 107 laufen muss, damit ein zu sendendes Bit auch schon von einem Teilnehmer empfangen wurde. Dies zeigt die Fig. 2, in welcher der Teilnehmer 103 einen FIFO-Speicher 201 aufweist.

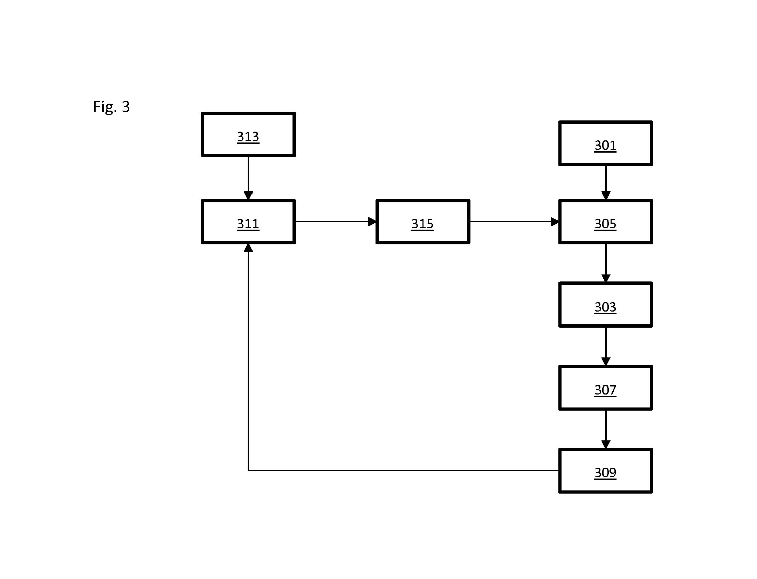

Fig. 3 zeigt ein Blockdiagramm eines Verfahrens zum Betreiben eines Teilnehmers eines Kommunikationsnetzwerks.

Es ist eine Zeitquelle 301 vorgesehen, die auf Englisch auch als "clock source" bezeichnet werden kann. Die Zeitquelle 301 des Teilnehmers umfasst einen Quarz, insbesondere einen externen Quarz, und eine PLL, die einen GHz-Takt erzeugen können. Beispielsweise können aber auch andere Taktraten vorgesehen sein. Im Folgenden wird dennoch beispielhaft auf diesen GHz-Takt abgestellt. Er soll aber nicht einschränkend sein. Ein Takt entspricht einem Zyklus. Entsprechend dem GHz-Takt wird eine interne Uhr 303 des Teilnehmers hochgezählt, insbesondere um 10 hochgezählt, also inkrementiert. Also wird pro Zyklus inkrementiert. Die interne Uhr 303 kann auf Englisch auch als "local clock" bezeichnet werden. Bei einem GHz-Takt und einem Inkrementierungswert von 10 hat die interne Uhr 303 also die Einheit 100 ps. Aus dieser internen Uhr 303 wird der Sendetakt 309 ermittelt oder gebildet. Bei einer Einheit von 100 ps der internen Uhr 303 und einer Division durch 10 gemäß dem Schritt 307 wird also ein GHz-Sendetakt ermittelt oder gebildet. Bei anderen Sendetakten können andere Operationen, insbesondere eine Division durch einen Wert verschieden von 10, vorgesehen sein, die auf die interne Uhr 303 angewendet werden, um den Sendetakt 309 zu ermitteln oder zu bilden. Der Divisionswert hängt also insbesondere von den Taktraten ab, also vom konkreten Einzelfall.

Der Sendetakt 309 wird zurückgeführt und mit einer Referenzzeit 313 gemäß einem Schritt 311 verglichen. Dies beispielsweise mittels einer Vergleichseinrichtung. Die Referenzzeit 313 wird beispielsweise mittels einer Referenzuhr, die auf Englisch auch als "master clock" bezeichnet werden kann, bereitgestellt. Hierbei kann beispielsweise vorgesehen sein, dass die Referenzzeit 313 über mehrere Zyklen gemittelt und/oder mittels einer Laufzeitkompensation normiert wurde. Die Referenzzeit 313 wird vorzugsweise zyklisch, also in jedem Zyklus, mittels eines Telegramms empfangen. Die Differenz zwischen der internen Uhr 303 und der Referenzuhr, also die Differenz zwischen der Referenzzeit und der internen Uhr 303, wird einer Regeleinrichtung 315 bereitgestellt, die einen Gang der internen Uhr 303 regeln kann. Die Regeleinrichtung 315 bewirkt in vorteilhafter Weise, dass die interne Uhr 303 in einem Zyklus nicht mit einem Inkrementierungswert von 10, sondern nur mit einem Inkrementierungswert von 9 (wenn die interne Uhr 303 bezogen auf die Referenzuhr zu schnell läuft) oder mit 11 (wenn die interne Uhr 303 bezogen auf die Referenzuhr zu langsam läuft) inkrementiert wird. Die Regeleinrichtung 315 wählt also den Inkrementierungswert 305 entsprechend der Differenz, also dem Ergebnis des Vergleichs gemäß dem Schritt 311, aus. Das heißt also insbesondere, dass die interne Uhr 303 entsprechend dem Ergebnis des Vergleichs gemäß dem Schritt 311 mit einem der folgenden Inkrementierungswerte inkrementiert wird: 9, 10 und 11. Basierend auf der dann entsprechend nachgeregelten internen Uhr 303 wird der Sendetakt 309 wie vorstehend beschrieben ermittelt, wobei dieser so ermittelte Sendetakt 309 wieder zurückgeführt und mit der im folgenden Zyklus empfangenen Referenzzeit 313 verglichen wird.

Es wird also dadurch in vorteilhafter Weise erreicht, dass sich Sendetakte von Teilnehmern, die entsprechend den vorstehend gemachten Ausführungen betrieben werden, nur noch im Nanosekundenbereich voneinander abweichen, also << 1 ppm.

Die vorstehend gemachten Ausführungen lassen sich auf jede beliebige Topologie, zum Beispiel Ring, Linie, Stern, Baum und eine Kombination hiervon, anwenden, bei dem je zwei Teilnehmer unterschiedliche Sendetakte haben. Die vorstehend gemachten Ausführungen sind insbesondere nicht auf 1 GHz und/oder die angegebenen Inkrementierungswerte (9, 10, 11) beschränkt. Diese sind lediglich als Beispiel zu verstehen. Andere Inkrementierungswerte und/oder andere Sendetakte und/oder andere Takte des Quarzes sind möglich. Auch kann eine interne Regelung insbesondere anders erfolgen. Entscheidend ist vorzugsweise, dass durch einen Vergleich der internen Uhr 303 mit einer Referenzuhr ein Sendetakt zwischen zwei Teilnehmern synchronisiert wird. Grundsätzlich kann eine Regelung auch extern erfolgen, solange das Ziel der synchronen Sendetakte erreicht wird. Das heißt also insbesondere, dass mittels der Synchronisierung des jeweiligen Sendetakts von zwei Teilnehmern auf eine gemeinsame Referenzuhr die Sendetakte der Teilnehmer gleich sind, also synchron zu einander laufen.

Die Sendetaktsynchronisierung ist nicht auf zwei Teilnehmer beschränkt, muss aber vorzugsweise auch nicht ein ganzes Kommunikationsnetzwerk umspannen. Es ist bereits vorzugsweise vorteilhaft, wenn eine Sendetaktsynchronisierung in einem oder mehreren Teilkommunikationsnetzwerken erfolgt. In jedem Teilkommunikationsnetzwerk, das auf eine Referenzuhr dieses Teilkommunikationsnetzwerkes synchronisiert ist, kann das Verfahren angewendet werden. An den Übergängen von einem synchronisierten Teilkommunikationsnetzwerk zu einem nichtsynchronen Teilnehmer und/oder Teilkommunikationsnetzwerk ist vorzugsweise ein FIFO-Speicher vorgesehen, also insbesondere wird ein solcher FIFO-Speicher aktiviert.

Nach einer Ausführungsform kann vorgesehen sein, dass, wenn eine Qualität der Synchronisierung nicht ausreicht, um die FIFOs gänzlich abzuschalten, die erreichte Qualität der Synchronisierung ermittelt wird (Ermittlung der Güte), wobei basierend auf der ermittelten Qualität oder Güte die entsprechend notwendige Latenz der FIFOs eingestellt wird. Dadurch ergibt sich in vorteilhafter Weise eine kürzere Latenz der FIFOs als im schlechtesten Fall, der durch die maximale Abweichung der Sendetakte bestimmt ist.

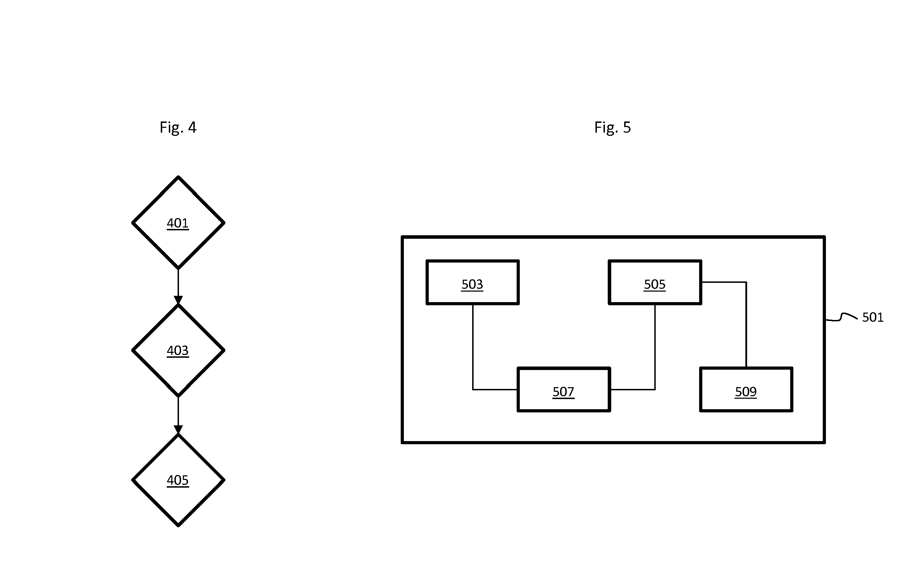

Fig. 4 zeigt ein Ablaufdiagramm eines Verfahrens zum Betreiben eines Teilnehmers eines Kommunikationsnetzwerks.

Gemäß einem Schritt 401 wird eine Referenzzeit über das Kommunikationsnetzwerk mittels des Teilnehmers empfangen. In einem Schritt 403 wird eine interne Uhr des Teilnehmers basierend auf der empfangenen Referenzzeit nachgeregelt. Dies insbesondere, um die interne Uhr des Teilnehmers auf eine Referenzuhr zu synchronisieren, die die Referenzzeit bereitstellt oder vorgibt. In einem Schritt 405 wird ein Sendetakt basierend auf der nachgeregelten internen Uhr ermittelt. In einer nicht gezeigten Ausführungsform kann vorgesehen sein, dass ein Telegramm mittels des Teilnehmers basierend auf dem ermittelten Sendetakt gesendet wird.

Fig. 5 zeigt einen Teilnehmer 501 für ein Kommunikationsnetzwerk.

Der Teilnehmer 501 umfasst eine Kommunikationsschnittstelle 503 zum Empfangen einer Referenzzeit in einem ersten Zyklus über das Kommunikationsnetzwerk. Die Kommunikationsschnittstelle 503 kann beispielsweise ausgebildet sein, ein Telegramm zu empfangen. Das Telegramm kann beispielsweise die Referenzzeit umfassen. Die Kommunikationsschnittstelle 503 kann insbesondere ausgebildet sein, ein Telegramm zu senden.

Der Teilnehmer 501 umfasst eine interne Uhr 505. Ferner umfasst der Teilnehmer 501 eine Regeleinrichtung 507 zum Nachregeln der internen Uhr 505 in dem ersten Zyklus basierend auf der empfangenen Referenzzeit. Ferner umfasst der Teilnehmer 501 eine Ermittlungseinrichtung 509 zum Ermitteln eines Sendetakts in dem ersten Zyklus basierend auf der nachgeregelten internen Uhr 505.

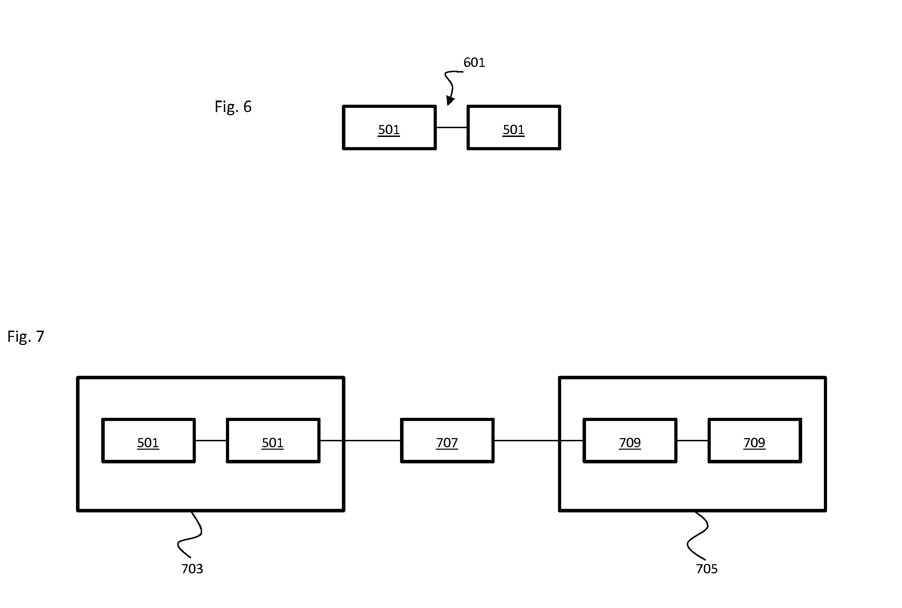

Fig. 6 zeigt ein Kommunikationsnetzwerk 601.

Das Kommunikationsnetzwerk 601 umfasst zwei Teilnehmer 501, die nacheinander geschaltet sind. Das heißt also insbesondere, dass der eine Teilnehmer 501 ein Telegramm mit seiner Senderate an den anderen Teilnehmer 501 senden kann und umgekehrt. Da aber beide Senderaten synchronisiert sind, wird eine Verzögerungszeit in vorteilhafter Weise verringert oder sogar ganz vermieden.

In einer nicht gezeigten Ausführungsform kann vorgesehen sein, dass die Teilnehmer 101 und 103 gemäß den Figuren 1 und 2 analog zu dem Teilnehmer 501 gemäß Fig. 5 gebildet sind und entsprechend dem erfindungsgemäßen Verfahren betrieben werden.

Fig. 7 zeigt ein weiteres Kommunikationsnetzwerk 701.

Das Kommunikationsnetzwerk 701 umfasst zwei Teilkommunikationsnetzwerke 703 und 705. Dem Teilkommunikationsnetzwerk 703 sind zumindest zwei Teilnehmer 501 zugeordnet. Dem Teilkommunikationsnetzwerk 705 sind Teilnehmer 709 zugeordnet, wobei diese Teilnehmer 709 aber nicht nach dem erfindungsgemäßen Verfahren betrieben werden. Das heißt also insbesondere, dass das Teilkommunikationsnetzwerk 705 nicht auf eine Referenzuhr synchronisiert ist. Zwischen den beiden Teilkommunikationsnetzwerken 703 und 705 ist ein FIFO-Speicher 707 vorgesehen zum Speichern von Telegrammen, die von dem Teilkommunikationsnetzwerk 703 zum Teilkommunikationsnetzwerk 705 und umgekehrt gesendet werden. Dieser FIFO-Speicher 707 kann nichtsynchrone Senderaten von Teilnehmern der beiden Teilkommunikationsnetzwerke 703 und 705 bei einem Senden von Telegrammen von dem einen der Teilkommunikationsnetzwerke zum anderen und umgekehrt ausgleichen oder kompensieren.

In einer nicht gezeigten Ausführungsform kann vorgesehen sein, dass zwischen Teilnehmern, wobei nur einer der Teilnehmer erfindungsgemäß betrieben wird, also auf eine Referenzuhr synchronisiert wird, ein FIFO-Speicher vorgesehen ist, der Telegramme, die zwischen den beiden Teilnehmern hin und her gesendet werden, speichern kann.

Ein Teilnehmer, dessen interne Uhr auf eine Referenzuhr synchronisiert wird, kann als ein synchronisierter Teilnehmer bezeichnet werden. Ein Teilnehmer, dessen interne Uhr nicht auf eine Referenzuhr synchronisiert wird, kann als ein nichtsynchronisierter Teilnehmer bezeichnet werden.

Zusammenfassend umfasst die Erfindung also insbesondere den Gedanken, jeweilige Senderaten von zwei Teilnehmern eines Kommunikationsnetzwerks zu synchronisieren, indem eine jeweilige interne Uhr der Teilnehmer auf eine gemeinsame Referenzuhr synchronisiert wird, wobei die jeweilige Senderate basierend auf der synchronisierten internen Uhr ermittelt wird.

## Patentansprüche

1. Verfahren zum Betreiben eines Teilnehmers (501) in einem Kommunikationsnetzwerks (601, 701), umfassend:
- Empfangen (401) einer Referenzzeit (313) über das Kommunikationsnetzwerk (601, 701) durch den Teilnehmer (501),
**gekennzeichnet durch**:
- Vergleichen eines Sendetakts (309) des Teilnehmers (501), der für einen zeitlich vorhergehenden Takt auf der Grundlage einer internen Uhr (303, 505) des Teilnehmers (501) ermittelt wurde, mit der Referenzzeit (313),
- Nachregeln (403) der internen Uhr (303, 505) des Teilnehmers (501) basierend auf dem Vergleichsergebnis, und
- Ermitteln (405) eines **durch** den Teilnehmer (501) für den aktuellen Takt zu verwendenden Sendetakts (309) basierend auf der nachgeregelten internen Uhr.

2. Verfahren nach Anspruch 1, wobei die internen Uhr (303) mit einem Inkrementierungswert (305) inkrementiert wird, und wobei das Nachregeln ein Anpassen des Inkrementierungswerts (305) umfasst.

3. Verfahren nach Anspruch 1 oder 2, wobei die Referenzzeit (313) in jedem Takt mittels eines Telegramms vom Teilnehmer (501) empfangen wird.

4. Verfahren nach einem der vorherigen Ansprüche, wobei die Referenzzeit (313) über mehrere Takte gemittelt und/oder mittels einer Laufzeitkompensation normiert wird.

5. Verfahren nach einem der vorherigen Ansprüche, wobei eine Güte des Nachregelns ermittelt wird, und wobei abhängig von der ermittelten Güte eine Latenz eines zum Speichern eines empfangenen Telegramms vorgesehenen FIFO-Speichers (201, 707) des Teilnehmers (501) eingestellt wird.

6. Verfahren nach einem der vorherigen Ansprüche, wobei eine Taktdauer von einem Takt einer Zeitquelle des Teilnehmers (501) vorgegeben wird.

7. Teilnehmer (501) für ein Kommunikationsnetzwerk (601, 701), umfassend:
- eine Kommunikationsschnittstelle (503) zum Empfangen einer Referenzzeit (313) über das Kommunikationsnetzwerk (601, 701),
- eine interne Uhr (303, 505),
- eine Regeleinrichtung (315, 507) zum Nachregeln der internen Uhr (303, 505) basierend auf der empfangenen Referenzzeit (313), und
- eine Ermittlungseinrichtung (509) zum Ermitteln eines Sendetakts (309) basierend auf der internen Uhr (303, 505),
**dadurch gekennzeichnet,**
**dass** die Regeleinrichtung (315, 507) ausgebildet ist, einen Sendetakt (309) des Teilnehmers (501), der für einen zeitlich vorhergehenden Zyklus auf der Grundlage der internen Uhr (303, 505) des Teilnehmers (501) ermittelt wurde, mit der Referenzzeit (313) zu vergleichen und die internen Uhr (303, 505) des Teilnehmers (501) basierend auf dem Vergleichsergebnis nachzuregeln, und
**dass** die Ermittlungseinrichtung (509) ausgelegt ist, einen für den aktuellen Zyklus zu verwendenden Sendetakts (309) basierend auf der nachgeregelten internen Uhr zu ermitteln.

8. Teilnehmer (501) nach Anspruch 7, wobei die internen Uhr ausgelegt ist, mit einem Inkrementierungswert (305) inkrementiert zu werden, und wobei die Regeleinrichtung (315, 507) ausgebildet ist, zum Nachregeln die interne Uhr (303, 505) den Inkrementierungswert (305) anzupassen.

9. Teilnehmer (501) nach Anspruch 7 oder 8, der ausgelegt ist, die Referenzzeit (313) in jedem Takt mittels eines Telegramms zu empfangen..

10. Teilnehmer (501) nach einem der Ansprüche 7 bis 9, wobei ein FIFO-Speicher (201, 707) zum Speichern eines empfangenen Telegramms vorgesehen ist, wobei eine Latenz des FIFO-Speichers (201, 707) abhängig von einer ermittelten Güte des Nachregelns einstellbar ist.

11. Teilnehmer (501) nach einem der Ansprüche 7 bis 10, wobei eine Zeitquelle (301) zum Vorgeben einer Taktdauer abhängig von einem Takt der Zeitquelle vorgesehen ist.

12. Verfahren zum Betreiben eines Kommunikationsnetzwerk (601, 701), wobei ein Teilnehmer (103) ein Telegramm (107) mit einem Empfangstakt empfängt und das Telegramm (107) mit einem Sendetakt (111) weitersendet,
**dadurch gekennzeichnet, dass**
der Sendetakt basierend auf einer internen Uhr (303) im Teilnehmer ermittelt wird, wobei die internen Uhr (303) auf eine Referenzzeit (313) synchronisiert wird, in dem ein Sendetakt des Teilnehmers, der für einen zeitlich vorhergehenden Takt auf der Grundlage der internen Uhr (303) des Teilnehmers ermittelt wurde, mit der Referenzzeit (313) verglichen und die interne Uhr (303) des Teilnehmers basierend auf dem Vergleichsergebnis nachgeregelt wird, wobei ein für den aktuellen Takt zu verwendenden Sendetakt (309) basierend auf der nachgeregelten internen Uhr ermittelt wird.

13. Verfahren nach Anspruch 12, wobei die internen Uhr (303) mit einem Inkrementierungswert (305) inkrementiert wird, und wobei das Nachregeln ein Anpassen des Inkrementierungswerts (305) umfasst.

14. Verfahren nach Anspruch 12 oder 13, wobei der Empfangstakt (109) einem Sendetakt (105) eines weiteren Teilnehmers (101) entspricht und die Referenzzeit (313) mittels des Telegramms vom weiteren Teilnehmer empfangen wird.

15. Verfahren zum Betreiben eines Kommunikationsnetzwerk (601, 701) nach Anspruch 12 oder 13, wobei zwei Teilkommunikationsnetzwerke (703, 705) vorgesehen sind, wobei zwischen den zwei Teilkommunikationsnetzwerken (703, 705) ein FIFO-Speicher (201, 707) zum Speichern von von einem der Teilkommunikationsnetzwerke (703, 705) zum anderen und umgekehrt gesendeten Telegrammen vorgesehen ist.

## Claims

1. Method for operating a node (501) in a communications network (601, 701), comprising:
- the node (501) receiving (401) a reference time (313) via the communications network (601, 701); **characterized by**:
- comparing a transmit clock (309) of the node (501), which was determined for an earlier clock cycle on the basis of a local clock (303, 505) of the node (501), with the reference time (313);
- correcting (403) the local clock (303, 505) of the node (501) on the basis of the comparison result; and
- determining (405) on the basis of the corrected local clock a transmit clock (309) to be used by the node (501) for the current clock cycle.

2. Method according to Claim 1, wherein the local clock (303) is incremented by an incrementation value (305), and wherein the correction involves adjusting the incrementation value (305).

3. Method according to Claim 1 or Claim 2, wherein the reference time (313) is received by the node (501) in every clock cycle by means of a frame.

4. Method according to any of the previous claims, wherein the reference time (313) is averaged over a plurality of clock cycles and/or normalized by compensating for the propagation delay.

5. Method according to any of the previous claims, wherein a quality of the correction is evaluated, and wherein a latency of a FIFO memory (201, 707) of the node (501), which FIFO memory is provided for storing a received frame, is set according to the evaluated quality.

6. Method according to any of the previous claims, wherein a clock period is defined by a clock cycle from a clock source of the node (501).

7. Node (501) for a communications network (601, 701), which node comprises:
- a communications interface (503) for receiving a reference time (313) via the communications network (601, 701),
- a local clock (303, 505);
- a controller (315, 507) for correcting the local clock (303, 505) on the basis of the received reference time (313); and
- a determination unit (509) for determining a transmit clock (309) on the basis of the local clock (303, 505),
**characterized in that**
the controller (315, 507) is designed to compare a transmit clock (309) of the node (501), which transmit clock was determined for an earlier cycle on the basis of the local clock (303, 505) of the node (501), with the reference time (313), and to correct the local clock (303, 505) of the node (501) on the basis of the comparison result, and **in that** the determination unit (509) is designed to determine on the basis of the corrected local clock a transmit clock (309) to be used for the current cycle.

8. Node (501) according to Claim 7, wherein the local clock is designed to be incremented by an incrementation value (305), and wherein the controller (315, 507) is designed to adjust the incrementation value (305) for the purpose of correcting the local clock (303, 505).

9. Node (501) according to Claim 7 or Claim 8, which is designed to receive the reference time (313) in every clock cycle by means of a frame.

10. Node (501) according to any of Claims 7 to 9, wherein a FIFO memory (201, 707) is provided for storing a received frame, wherein a latency of the FIFO memory (201, 707) can be set according to an evaluated quality of the correction.

11. Node (501) according to any of Claims 7 to 10, wherein a clock source (301) is provided for defining a cycle period on the basis of a clock cycle from the clock source.

12. Method for operating a communications network (601, 701), wherein a node (103) receives a frame (107) using a receive clock, and forwards the frame (107) using a transmit clock (111),
**characterized in that**
the transmit clock is determined on the basis of a local clock (303) in the node, wherein the local clock (303) is synchronized to a reference time (313), wherein a transmit clock of the node, which transmit clock was determined for an earlier clock cycle on the basis of the local clock (303) of the node, is compared with the reference time (313), and the local clock (303) of the node is corrected on the basis of the comparison result, wherein a transmit clock (309) to be used for the current clock cycle is determined on the basis of the corrected local clock.

13. Method according to Claim 12, wherein the local clock (303) is incremented by an incrementation value (305), and wherein the correction involves adjusting the incrementation value (305).

14. Method according to Claim 12 or Claim 13, wherein the receive clock (109) equals a transmit clock (105) of a further node (101), and the reference time (313) is received by the further node by means of the frame.

15. Method for operating a communications network (601, 701) according to Claim 12 or Claim 13, wherein two communications subnetworks (703, 705) are provided, wherein a FIFO memory (201, 707) for storing frames transmitted from one of the communications subnetworks (703, 705) to the other, and vice versa, is provided between the two communications subnetworks (703, 705).

## Revendications

1. Procédé d'exploitation d'un utilisateur (501) au sein d'un réseau de communication (601, 701), comprenant :
- la réception (401) d'un temps de référence (313) relatif au réseau de communication (601, 701) par l'utilisateur (501),
**caractérisé par** ;
- la comparaison d'une cadence d'émission (309) de l'utilisateur (501), qui a été déterminée pour une cadence chronologiquement antérieure sur la base d'une horloge interne (303, 505) de l'utilisateur (501), avec le temps de référence (313),
le réglage ultérieur (403) de l'horloge interne (303, 505) de l'utilisateur (501) sur la base du résultat de la comparaison, et
la détermination (405) d'une cadence d'émission (309) à utiliser par l'utilisateur (501) pour la cadence actuelle sur la base de l'horloge interne réglée ultérieurement.

2. Procédé selon la revendication 1, dans lequel l'horloge interne (303) est incrémentée d'une valeur d'incrémentation (305), et dans lequel le réglage ultérieur inclut une adaptation de la valeur d'incrémentation (305).

3. Procédé selon la revendication 1 ou 2, dans lequel le temps de référence (313) dans chaque cadence est reçu par le biais d'un télégramme de l'utilisateur (501).

4. Procédé selon l'une des revendications qui précèdent, dans lequel on établit la moyenne du temps de référence (313) sur plusieurs cadences et/ou une normalisation de celui-ci au moyen d'une compensation de la durée d'exécution.

5. Procédé selon l'une des revendications qui précèdent, dans lequel on détermine une qualité du réglage ultérieur, et dans lequel, en fonction de la qualité déterminée, on règle une latence d'une mémoire FIFO (201, 707) de l'utilisateur (501) prévue en vue de la sauvegarde d'un télégramme reçu.

6. Procédé selon l'une des revendications qui précèdent, dans lequel une durée de cadence est prescrite par une cadence d'une source horaire de l'utilisateur (502).

7. Utilisateur (501) pour un réseau de communication (601, 701), comprenant :
- une interface de communication (503) pour la réception d'un temps de référence (313) par le biais du réseau de communication (601, 701),
- une horloge interne (303, 505),
- un dispositif de réglage (315, 507) pour le réglage ultérieur de l'horloge interne (303, 505) basé sur le temps de référence reçu (313), et
- un moyen de détermination (509) pour la détermination d'une cadence d'émission (309) basée sur l'horloge interne (303, 505),
**caractérisé en ce que**
le dispositif de réglage (315, 507) est configuré de manière à comparer une cadence d'émission (309) de l'utilisateur (501), qui a été déterminée pour un cycle chronologiquement antérieur sur la base de l'horloge interne (303, 505) de l'utilisateur (501), au temps de référence (313) et à régler ultérieurement l'horloge interne (303, 505) de l'utilisateur (501) en se basant sur le résultat de la comparaison, et
**en ce que** le dispositif de détermination (509) est conçu de manière à déterminer une cadence d'émission (309) à utiliser pour le cycle actuel en se basant sur l'horloge interne réglée ultérieurement.

8. Utilisateur (501) selon la revendication 7, dans lequel l'horloge interne est conçue pour être incrémentée d'une valeur d'incrémentation (305), et dans lequel le dispositif de réglage (315, 507) est réalisé en vue d'adapter la valeur d'incrémentation (305) pour le réglage ultérieur de l'horloge interne (303, 505).

9. Utilisateur (501) selon la revendication 7 ou 8, qui est conçu pour recevoir le temps de référence (313) à chaque cadence par le biais d'un télégramme.

10. Utilisateur (501) selon l'une des revendications 7 à 9, dans lequel une mémoire FIFO (201, 707) est prévue pour la sauvegarde d'un télégramme reçu, dans lequel une latence de la mémoire FIFO (201, 707) peut être réglée en fonction d'une qualité déterminée du réglage ultérieur.

11. Utilisateur (501) selon l'une des revendications 7 à 10, dans lequel une source de temps (301) est prévue pour la rescription d'une durée de cadence en fonction d'une cadence de la source de temps.

12. Procédé pour l'exploitation d'un réseau de communication (601, 701), dans lequel un utilisateur (103) reçoit un télégramme (107) avec une cadence de réception et retransmet le télégramme (107) avec une cadence d'émission (111),
**caractérisé en ce que**
la cadence d'émission est déterminée dans l'utilisateur en se basant sur une horloge interne (303), dans lequel l'horloge interne (303) est synchronisée sur un temps de référence (313) dans lequel une cadence d'émission de l'utilisateur, qui a été déterminée pour une cadence chronologiquement antérieure en se basant sur l'horloge interne (303) de l'utilisateur, est comparée au temps de référence (313), et l'horloge interne (303) de l'utilisateur fait l'objet d'un réglage ultérieur en se basant sur le résultat de la comparaison,
dans lequel une cadence d'émission à utiliser pour la cadence actuelle est déterminée (309) en se basant sur l'horloge interne réglée ultérieurement.

13. Procédé selon la revendication 12, dans lequel l'horloge interne (303) est incrémentée d'une valeur d'incrémentation (305), et dans lequel le réglage ultérieur comprend une adaptation de la valeur d'incrémentation (305).

14. Procédé selon la revendication 12 ou 13, dans lequel la cadence de réception (109) correspond à une cadence d'émission (105) d'un autre utilisateur (101) et le temps de référence (313) est reçu de la part de l'autre utilisateur par le biais du télégramme.

15. Procédé pour l'exploitation d'un réseau de communication (601, 701) selon la revendication 12 ou 13, dans lequel deux sous-réseaux de télécommunication (703, 705) sont prévus,
dans lequel on prévoit entre les deux sous-réseaux de télécommunication (703, 705) une mémoire FIFO (201, 707) pour la sauvegarde de télégrammes envoyés par l'un des sous-réseaux de télécommunication (703, 705) vers l'autre, et inversement.
